Europäisches Patentamt

European Patent Office

Office européen des brevets

(19)

(11) Numéro de publication: **0 014 608**
**B1**

# (12) FASCICULE DE BREVET EUROPEEN

(45) Date de publication du fascicule du brevet:
26.08.87

(51) Int. Cl.⁴: **G 02 F 1/135**

(21) Numéro de dépôt: **80400060.2**

(22) Date de dépôt: **15.01.80**

(54) **Dispositif d'affichage électro-optique.**

(30) Priorité: **13.02.79 FR 7903636**

(43) Date de publication de la demande:
**20.08.80 Bulletin 80/17**

(45) Mention de la délivrance du brevet:
**26.08.87 Bulletin 87/35**

(84) Etats contractants désignés:
**DE GB IT NL SE**

(56) Documents cités:
**DE - A - 2 355 889**
**FR - A - 2 132 164**
**GB - A - 915 772**
**GB - A - 1 525 954**
**US - A - 2 936 380**
**US - A - 3 479 651**

**IBM TECHNICAL DISCLOSURE BULLETIN, vol. 11, no. 6,**
**novembre 1968, New York, US; F.M.**
**LAY:"Photoconductive coupled gas cell", pages**
**590-591**

(73) Titulaire: **THOMSON-CSF, 173, Boulevard Haussmann,**
**F-75379 Paris Cedex 08 (FR)**

(72) Inventeur: **Hareng, Michel, "THOMSON-CSF" -**
**SCPI 173, bld Haussmann, F-75360 Paris Cedex 08 (FR)**
Inventeur: **Huignard, Jean-Pierre, "THOMSON-CSF" -**
**SCPI 173, bld Haussmann, F-75360 Paris Cedex 08 (FR)**
Inventeur: **Le Berre, Serge, "THOMSON-CSF" -**
**SCPI 173, bld Haussmann, F-75360 Paris Cedex 08 (FR)**

(74) Mandataire: **Desperrier, Jean-Louis et al,**
**THOMSON-CSF SCPI 19, avenue de Messine,**
**F-75008 Paris (FR)**

## Description

La présente invention se rapporte aux dispositifs d'affichage électro-optiques dans lesquels un matériau dont l'aspect optique change sous l'action d'une tension électrique est disposé selon une couche mince entre deux électrodes. En appliquant entre deux électrodes une tension électrique, le matériau change d'aspect au point de croisement de ces deux électrodes. Dans le cas où l'on utilise une sélection matricielle avec un matériau présentant un effet de seuil, les tensions appliquées aux autres électrodes sont telles qu'au point de croisement entre ces deux autres électrodes et les deux électrodes sélectionnées pour la visualisation du point choisi, la différence de potentiel est inférieure à la tension du seuil. Ainsi seul le point de croisement sélectionné change d'aspect optique.

Un tel dispositif d'adressage est notamment décrit dans l'ouvrage intitulé «Opto-électronique» de G. Broussaud portant la référence ISBN: 2-225 3918-6, pages 208 à 210. On trouvera dans ce même ouvrage, comme exemple de matériau à effet de seuil, les cristaux liquides nématiques fonctionnant selon le mode torsadé et dits en nématique torsadé; voir pages 298 à 300.

Toutefois dans un tel dispositif à cristal liquide torsadé la vitesse d'inscription et le contraste sont relativement modérés et de plus ce dispositif ne comporte pas de mémoire interne, ce qui oblige à faire une inscription dynamique permanente qui utilise la persistance rétinienne mais diminue la résolution maximale possible.

Pour augmenter la vitesse d'inscription et le contraste et le doter d'une mémoire interne, on prévoit dans la structure du dispositif une couche d'un matériau photoconducteur. On trouvera un exemple d'une telle structure dans le brevet américain US 3 479 651. Cependant le dispositif décrit ne fonctionne pas avec un cristal liquide utilisé en diffusion dynamique. Un autre exemple d'une structure semblable se trouve dans la demande de brevet Britannique GB-A-915 772 déposée le 23 avril 1959 qui propose un panneau électroluminescent à adressage électrique par réseaux croisés d'électrodes, dans lequel chaque croisement est muni d'un dipole électrique qui incorpore un élément photoconducteur irradié par une zone délimitée d'un film électroluminescent commun. L'irradiation de l'élément photoconducteur réduit le champ électrique à l'intérieur de celui-ci en augmentant le champ électrique à travers ladite zone du film électroluminescent. Chaque cellule d'un tel panneau fonctionne individuellement et des mesures sont prises pour éviter des perturbations qu'occasionnerait un éclairage ambiant. Un dispositif d'affichage électrooptique fonctionnant avec un cristal liquide utilisé en diffusion dynamique est également mentionné dans la demande de brevet Américain US-A-3 645 604 déposée le 10 août 1970.

L'invention concerne un dispositif d'affichage électrooptique du type comprenant une couche de cristal liquide présentant un effet de seuil et étant maintenu dans une phase permettant de rendre diffusant une lumière ambiante incidente sur un côté de la couche de cristal liquide sous l'action du champ électrique appliqué par deux réseaux d'électrodes situés respectivement de part et d'autre de la couche de cristal liquide, caractérisé en ce qu'il comporte deux masques munis d'ouvertures complémentaires à l'emplacement des points de visualisation définis par les réseaux d'électrodes, les masques encadrant la couche de cristal liquide de manière à ne laisser substantiellement passer que la lumière diffusée par le cristal liquide, et une couche de matériau photoconducteur recevant la lumière diffusée et insérée entre la couche de cristal liquide et celui des réseaux d'électrodes situé du côté de la couche de cristal liquide opposé à celui recevant la lumière ambiante incidente.

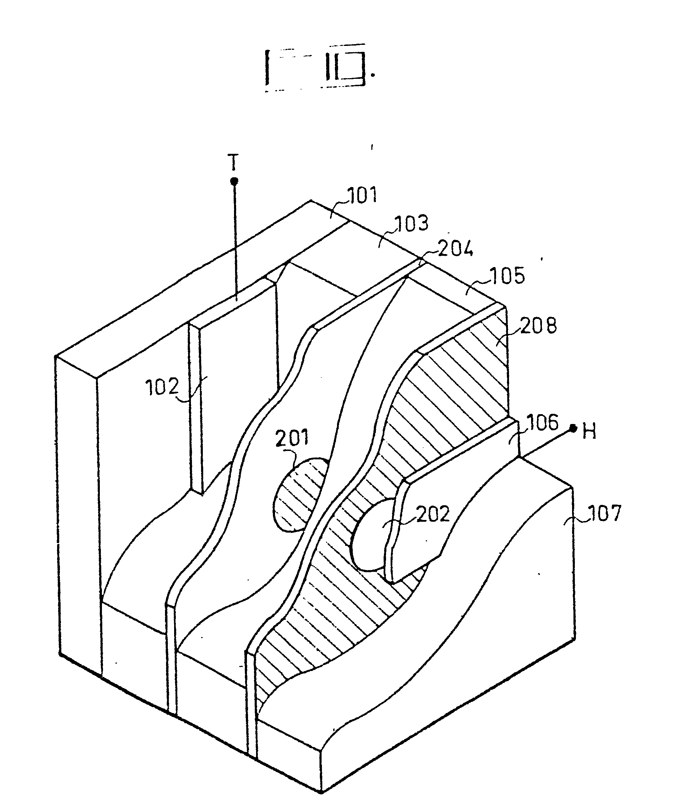

D'autres particularités et avantages de l'invention apparaîtront clairement dans la description suivante présentée à titre d'exemple non limitatif et faite en regard de la figure annexée.

Sur la figure, on a représenté un exemple de réalisation d'un dispositif de visualisation réduit à une électrode verticale et une électrode horizontale pour la clarté du dessin et correspondant à l'utilisation d'un cristal liquide en diffusion dynamique.

Une plaque de base 101 servant de support à la cellule supporte un ensemble d'électrodes verticales telles que 102. Ces électrodes sont reliées à des connections T qui servent à les alimenter par des signaux extérieurs. Leur surface est réfléchissante et elles sont obtenues par exemple par un dépôt d'aluminium sous vide qui est ensuite photogravé en forme de colonnes.

Sur ces électrodes on a déposé une couche 103 d'un matériau photo-conducteur minéral tel que par exemple le séléniure de cadmiun CdSe ou organique tel que le polyvinyle carbazole (P.V.K.) éventuellement sensibilisé dans le visible.

Sur la couche de photo-conducteur 103, se trouve un film 204.

Sur ce film 204 repose une couche de cristal liquide 105, puis un autre film 208. Superposé à ce film 208, on trouve un ensemble d'électrodes horizontales transparentes tel que 106. Ces électrodes sont obtenues par exemple par dépôt d'une couche mince d'oxyde d'étain. Cette couche est ensuite photogravée pour former des lignes horizontales perpendiculaires aux électrodes verticales 102.

Une lame transparente 107 supporte ce deuxième ensemble d'électrodes et enferme la couche de cristal liquide.

Dans le cas du cristal liquide utilisé en diffusion dynamique, la lumière de visualisation n'est pas à proprement parler absorbée par le dispositif mais elle est simplement diffusée. C'est-à-dire que si la lumière frappe le cristal liquide en un point de sa face d'incidence, elle ressort par la face de sortie selon un cône dont le sommet est le point d'incidence. Dans ces conditions il faut utiliser des organes qui permettent à la lumière non diffusée d'être absorbée et à la lumière diffusée de ne pas l'être. En effet pour que le photo-conducteur change de résistivité sous l'influence de la lumière diffusée due à l'inscription il faut qu'il ne soit pas déjà dans un état conducteur dû à la lumière directe en dehors de l'inscription.

Pour cela on a disposé entre le photo-conducteur 103 et le cristal liquide 105 un film 204, et entre le cristal liquide 105 et la lame transparente 107 un film 208. Ces films portent des motifs négatifs l'un par rapport à l'autre et qui permettent dans un cas de laisser passer la lumière à l'emplacement du croisement des électrodes 102 et 106 et dans l'autre cas de bloquer le passage de cette lumière. Dans l'exemple de réalisation décrit, le film 204 est transparent et porte aux points de croisement des électrodes des ronds opaques tels que 201, et le film 208 est opaque et porte à l'emplacement de ces points de croisement des ronds transparents tels que 202. Les ronds 201 et 202 sont de même diamètre et sont inscrits dans la zone définie par le croisement des électrodes 102 et 106.

Le dispositif est éclairé par une lumière ambiante de visualisation du côté de la lame 107.

Ainsi lorsque le cristal liquide n'est pas diffusant, cette lumière de visualisation qui arrive par la lame 107, et qui est de préférence sensiblement parallèle, traverse les ronds 202 et est arrêté par les ronds 201. Lorsque par contre, ce cristal est, sous la commande de la tension appliquée entre les connexions T et H, devenu diffusant, la lumière incidente qui pénètre par le rond 202 est diffusée dans le cristal liquide avant d'atteindre le rond 201. De ce fait, elle s'étale sous la forme d'un cône dont la section de sortie sur la face du cristal liquide qui touche au film 204 déborde la surface du rond 201. Ainsi une partie de la lumière diffusée est toujours interceptée par le rond 201, mais une autre partie passe au-delà de ce rond et vient exciter le photo-conducteur qui se trouve derrière. Pour que cette autre partie soit suffisamment importante il faut que le diamètre des ronds soit d'une dimension sensiblement égale à l'épaisseur de la couche de cristal liquide. Si alors ces ronds sont trop petits par rapport à la surface couverte par le point de croisement des électrodes, on peut en disposer plusieurs en ce même point. Le point visualisé recouvrira ainsi plusieurs trous d'une manière semblable à ce qui se passe dans un tube de télévision en couleur où le spot cathodique recouvre plusieurs trous du masque d'ombre. On observera alors un point lumineux non pas par retour direct à travers le point d'incidence mais de manière oblique à travers les trous qui l'entourent.

Dans une variante de réalisation, permettant plus spécialement une observation par transmission, on supprime le film 204 et on grave le rond 201 dans l'électrode 102. Ainsi la lumière qui traverse le rond 202 frappe le photo-conducteur à un endroit où il n'y a pas de champ appliqué et donc l'effet d'avalanche ne se produit pas à cet endroit. Quand, par contre le cristal liquide est diffusant, la lumière déborde dans une zone du photo-conducteur soumise au champ électrique, et l'avalanche se déclenche.

Pour utiliser les dispositifs ainsi décrits par transmission avec une lumière ambiante susceptible d'exciter le matériau photo-conducteur, on peut insérer entre la plaque 101 et la couche 103 une couche de matériau fluorescent et un filtre. Le matériau fluorescent émet sous l'effet de la lumière incidente une radiation inactinique pour le matériau photo-conducteur et qui est perçue par l'observateur après avoir traversé le filtre. Par contre la lumière ambiante ne traverse pas ce filtre et n'excite donc pas le matériau photo-conducteur.

## Revendications

1. Dispositif d'affichage électro-optique du type comprenant une couche de cristal liquide (105) présentant un effet de seuil et étant maintenu dans une phase permettant de rendre diffusante une lumière ambiante incidente sur un côté de la couche de cristal liquide sous l'action du champ électrique appliqué par deux réseaux d'électrodes (102, 106) situés respectivement de part et d'autre de la couche de cristal liquide (105), caractérisé en ce qu'il comporte deux masques (204, 208) munis d'ouvertures complémentaires à l'emplacement des points de visualisation définis par les réseaux d'électrodes (102, 106), les masques encadrant la couche de cristal liquide (105) de manière à ne laisser substantiellement passer que la lumière diffusée par le cristal liquide (105), et une couche de matériau photoconducteur (103) recevant la lumière diffusée et insérée entre la couche de cristal liquide (105) et celui (102) des réseaux d'électrodes situé du côté de la couche de cristal liquide (105) opposé à celui recevant la lumière ambiante incidente.

2. Dispositif selon la revendication 1, caractérisé en ce que l'électrode (102) située du côté opposé à la lumière ambiante incidente est réfléchissante et repose sur un support opaque (101), que l'autre électrode (106) est transparente, et que les deux masques (204, 208) comportent plusieurs ouvertures complémentaires à l'emplacement de chaque point de visualisation.

3. Dispositif selon la revendication 1, caractérisé en ce que les deux électrodes sont transparentes et qu'il comprend une couche de matériau fluorescent située sur la face de la couche de matériau photoconducteur du côté opposé à la lumière ambiante incidente et un filtre situé sur la couche de matériau fluorescent du côté opposé à la couche de matériau photoconducteur; le matériau fluorescent émettant sous l'action de la lumière ambiante incidente une lumière émergeante pouvant traverser le filtre, et celui-ci empêchant les radiations d'une lumière ambiante, provenant d'une direction opposée à la direction de ladite lumière ambiante incidente, d'exciter la couche de matériau photoconducteur.

## Claims

1. Electro-optical display device of the type comprising a liquid crystal layer (105) presenting a threshold effect and maintained in a phase permitting it to be rendered diffusing for ambient light incident on one side of the liquid crystal layer under the action of an electric field applied by two electrode patterns (102, 106) respectively located on both sides of the liquid crystal layer (105), characterized in that it comprises two masks (204, 208) provided with openings complementary to the location of the visualization points defined by the electrode patterns (102, 103), the masks framing the liquid crystal layer (105) in a manner to substantially permit only the light diffused by the liquid crystal (105) to pass, and a layer of photoconductive material (103) receiving the diffused light and inserted between the liquid crystal layer (105) and that (102) of the electrode patterns located on the side of the liquid crystal layer (105) opposite to that receiving the incident ambient light.

2. Device according to claim 1, characterized in that the electrode (102) located on the side opposite to the incident ambient light is reflecting and is carried by an opaque support (101), that the other electrode (106) is transparent and that the two masks (204, 208) comprise a plurality of openings complementary to each visualization point.

3. Device according to claim 1, characterized in that the two electrodes are transparent and that it comprises a layer of fluorescent material located on the face of the layer of photoconductive material on the side opposite to the incident ambient light, and a filter located on the layer of fluorescent material on the side opposite to the layer of photoconductive material; the fluorescent material emitting, under the action of the incident ambient light, an emergent light capable of crossing the filter, the latter inhibiting radiations of an ambient light originating from a direction opposite to the direction of said incident ambient light from exciting the layer of photoconductive material.

**Patentansprüche**

1. Elektrooptische Anzeigevorrichtung derart, die eine Flüssigkristallschicht enthält, die einen Schwelleneffekt aufweist und in einer Phase gehalten wird, durch die auf eine Seite der Flüssigkristallschicht, die unter Einfluss eines elektrischen Feldes, das durch zwei beiderseits der Flüssigkristallschicht (105) gelegene Elektrodennetzwerke (102, 106) bewirkt wird, einfallendes Umgebungslicht streuend gemacht werden kann, dadurch gekennzeichnet, dass sie zwei Masken (204, 208) mit Öffnungen aufweist, die komplementär zu den Stellen der Anzeigepunkte sind, die durch die Elektrodennetzwerke (102, 106) festgelegt werden, wobei die Masken die Flüssigkristallschicht (105) so umrahmen, dass sie im wesentlichen nur das von der Flüssigkristallschicht (105) gestreute Licht durchlassen, und dass sie eine Schicht (103) aus photoleitendem Material umfasst, die das gestreute Licht aufnimmt und die zwischen der Flüssigkristallschicht (105) und demjenigen (102) Elektrodennetzwerk eingefügt ist, das auf der Seite der Flüssigkristallschicht (105) liegt, die von dem einfallenden Umgebungslicht abgewendet ist.

2. Vorrichtung nach Anspruch 1, dadurch gekennzeichnet, dass die Elektrode (102), die auf der von dem einfallenden Umgebungslicht abgewandten Seite angebracht ist, reflektierend ist und auf einem opaken Träger (101) liegt, dass die andere Elektrode (106) transparent ist, und dass die beiden Masken (204, 208) mehrere Öffnungen aufweisen, die komplementär zu der Lage jedes Anzeigepunkts sind.

3. Vorrichtung nach Anspruch 1, dadurch gekennzeichnet, dass die beiden Elektroden transparent sind und dass sie eine Schicht aus fluoreszierendem Material, die auf der Oberfläche der Schicht aus photoleitendem Material auf der von dem einfallenden Umgebungslicht abgewandten Seite liegt, und ein Filter aufweist, das auf der Schicht aus fluoreszierendem Material auf derjenigen Seite liegt, die von der Schicht aus photoleitendem Material abgewandt ist; wobei das fluoreszierende Material unter dem Einfluss des einfallenden Umgebungslichts ein austretendes Licht emittiert, das das Filter durchqueren kann, welches die Strahlung eines Umgebungslichts, das aus der dem einfallenden Umgebungslicht entgegengesetzten Richtung kommt, daran hindert, die Schicht aus photoleitendem Material anzuregen.

# FIG.